# EUROPÄISCHE PATENTSCHRIFT

(11) **EP 4 611 311 B1**
(45) Veröffentlichungstag und Bekanntmachung des Hinweises auf die Patenterteilung: **25.11.2026**
(21) Anmeldenummer: 25160088.8
(22) Anmeldetag: 25.02.2025
(51) Int. Cl.: H04L 9/40, H04W 12/30, H04W 12/069, G01D 4/00

(54) **SMART METER GATEWAY MIT NACHTRÄGLICH AKTIVIERBARER NETZWERKMANAGEMENT-FUNKTIONALITÄT UND VERFAHREN ZUR NACHTRÄGLICHEN AKTIVIERUNG EINER NETZWERKMANAGEMENT-FUNKTIONALITÄT EINES SMART METER GATEWAYS**
SMART METER GATEWAY WITH SUBSEQUENTLY ACTIVATABLE NETWORK MANAGEMENT FUNCTIONALITY AND METHOD FOR RETROACTIVE A NETWORK MANAGEMENT FUNCTIONALITY OF A SMART METER GATEWAY
PASSERELLE DE COMPTEUR INTELLIGENT AVEC FONCTIONNALITÉ DE GESTION DE RÉSEAU POST-ACTIVABLE ET PROCÉDÉ D'ACTIVATION ULTÉRIEURE D'UNE FONCTIONNALITÉ DE GESTION DE RÉSEAU D'UNE PASSERELLE DE COMPTEUR INTELLIGENT

(30) Priorität: 27.02.2024 DE 102024105386
(43) Veröffentlichungstag der Anmeldung: 03.09.2025
(73) Patentinhaber: Theben Smart Energy GmbH, 72401 Haigerloch (DE)
(72) Erfinder: Heumesser, Roland, 72108 Rottenburg (DE); Paulisch, Andreas, 21365 Adendorf (DE); Kapusta, Andreas, 72351 Geislingen (DE)
(74) Vertreter: Westphal, Mussgnug & Partner Patentanwälte mbB

(56) Entgegenhaltungen:
- EP-A1- 3 267 619
- WO-A1-2013/117421

## Beschreibung

Smart Meter Gateways (SMGW) sind die zentralen Komponenten intelligenter Messsysteme. Sie empfangen Messdaten von Zählern, speichern diese und bereiten sie für Marktakteure auf. Dementsprechend dienen sie als zentrale Kommunikationseinheit intelligenter Messsysteme, über die die Kommunikation
- mit dem Lokalen Metrologischen Netz (Local Metrological Network, LMN) mit Verbrauchsmessstellen eines oder mehrerer Verbraucher,
- mit dem Heimnetz (Home Area Network, HAN) des Letztverbrauchers, insbesondere mit steuerbaren Energieverbrauchern oder Energieerzeugern, und
- mit dem Weitverkehrsnetz (Wide Area Network, WAN), insbesondere mit dem SMGW-Administrator und externen Marktteilnehmern
abgewickelt wird.

Smart Meter Gateways unterliegen strengen sicherheitstechnischen Richtlinien. Die Einhaltung dieser Richtlinien müssen entsprechend in einem Zertifizierungsprozess des BSI nachgewiesen werden. Dabei werden alle sicherheitskritischen Elemente, welche der Zertifizierung, unterliegen im sogenannten "Target of Evaluation" (TOE) zusammengefasst.

Gemäß dem aktuellen Stand der Technik wird die Anbindung der Netzwerkkommunikation üblicherweise über Mobilfunk-Module außerhalb des TOEs realisiert.

Ein Problem ergibt sich dabei daraus, dass für den operativen Betrieb der SMGWs die (großen) Netzbetreiber die Möglichkeit brauchen, die Verbindungsqualität der Mobilfunkanbindung zu überwachen und ggf. die Konfiguration der Netzwerkanbindung zu korrigieren. Dies erfolgt meistens aus sicherheitstechnischen und aus organisatorischen Gründen in komplett separaten Abteilungen, welche nichts mit der eigentlichen Versorgungsnetz-überwachung zu tun haben und auch keine offiziellen Gateway Administrator (GWA) Rechte wahrnehmen.

Um solche Netzwerkmanagement(NwMgmt)-Funktionen zu realisieren ist es bekannt, separate Kommunikationsmodule zu verwenden, die mit einem eigenen Betriebssystem -typischerweise einem embedded Linux-System- das Modem des Mobilfunkmoduls mit der Funktionalität eines Routers verbinden, so dass das Kommunikationsmodul Daten, die Netzwerkmanagement-Funktionen betreffen und Daten, die die Kommunikation mit dem Gateway-Administrator oder externen Marktteilnehmern betreffen, differenziert weiterleiten kann.

Im Rahmen der Zertifizierung eines SMGW wird darauf geachtet, dass keine Messwerte oder Schaltvorgänge (Funktionalität des SMGWs) sowie konfigurierte Kommunikationskanäle kompromittiert werden können. Dennoch könnte die Kommunikation zum SMGW durch ein kompromittiertes NwMgmt gezielt gestört werden, was die Verfügbarkeit der Dienste verhindern kann und damit letztendlich die Stabilität des gesamten Versorgungsnetzes beeinflussen kann.

Daher unterliegen Funktionalitäten wie z.B. NwMgmt, welche direkt auf dem LTE-Modul angesiedelt ist strengen Sicherheitsanforderungen. Das umfasst eine kryptografisch gesicherte Kommunikation mit entsprechenden Zertifikaten.

Diese Zertifikate müssen über eine vollständig gesicherte Kommunikations-Kette von der ausstellenden Certificate Authority (CA) bis in einen sicheren Speicherbereich des LTE-Moduls transferiert werden. Weiterhin muss auch die übrige NwMgmt spezifische Konfiguration über einen manipulationssicheren Mechanismus auf das LTE-Modul aufgebracht werden.

Das Aufbringen von Zertifikaten erfolgt daher bislang schon während der Produktion des SMGWs im speziell gesicherten Produktionsbereich des Herstellers.

Viele Betreiber von SMGWs (Messstellenbetreiber) sind aber noch nicht in der Lage die Infrastruktur für das Netzwerkmanagement sofort beim ersten Rollout von SMGWs bereitzustellen. Das heißt sie würden gerne zunächst SMGWs ausrollen, die noch kein NwMgmt unterstützen. Diese sollen aber zu einem späteren Zeitpunkt in eine Netzwerkmanagement Infrastruktur eingebunden werden.

Zum Zeitpunkt einer solchen nachträglichen Aktivierung im Feld müssen Zertifikate und Konfiguration natürlich bereits auf dem LTE-Modul aufgebracht sein.

Eine "vorrausschauende" Aufbringung schon in der sicheren Produktion des Herstellers hat aber mehrere Nachteile:
- Die Zertifikate haben eine eng begrenzte Laufzeit, das heißt der Zeitraum innerhalb dessen eine Aktivierung erfolgen kann ist ebenso begrenzt.
- Der Messtellenbetreiber hat oft zum Zeitpunkt der Installation noch keine entsprechende Infrastruktur wie Public Key Infrastruktur (PKI) und NwMgmt Server. Daher kann zu diesem Zeitpunkt auch noch kein Serverzertifikat oder eine NwMgmt Server Konfiguration erstellt werden.
- Da NwMgmt einen komplett separaten Kommunikationskanal benötigt muss unter Umständen ein "vorläufiger" Management Server vorgehalten werden, welcher die Konfiguration des finalen kundenspezifischen NwMgmt Servers dann durchführt.
- Wenn zum Zeitpunkt der Produktion für alle SMGWs pauschal kostenpflichtige Zertifikate aufgespielt werden, sind das vermeidbare Mehrkosten für die SMGWs, welche nie eine NwMgmt erhalten.

Einen Smart Meter Gateway mit den Merkmalen des Oberbegriffs des Patentanspruchs 1 und ein Verfahren zu dessen Verwendung offenbart die WO 2013/117421 A1.

Die Aufgabe der Erfindung besteht daher darin, zur Vermeidung dieser erheblichen Nachteile einen Smart Meter Gateway mit nachträglich aktivierbarer Netzwerkmanagement-Funktionalität und ein Verfahren, das eine mit allen Sicherheitsanforderungen konforme nachträglichen Aktivierung einer Netzwerkmanagement-Funktionalität eines bereits installierten Smart Meter Gateways ermöglicht, bereitzustellen.

Diese Aufgaben werden gelöst durch einen Smart Meter Gateway mit den Merkmalen des Patentanspruchs 1 und durch ein Verfahren mit den Merkmalen des Patentanspruchs 2. Vorteilhafte Weiterbildungen der Erfindung sind Gegenstand der abhängigen Patentansprüche.

Das erfindungsgemäße Smart Meter Gateway hat ein Mobilfunkmodul, das eingerichtet ist, um über ein Mobilfunknetz Messdaten an einen autorisierten Empfänger weiterzuleiten.

Er hat ferner einen Prozessor, der mit einem Arbeitsspeicher und/oder einem Flashspeicher zusammenwirkt, um einerseits auf einem Betriebssystem eine Metering-Software zu betreiben, mit der Messdaten ausgelesen und verschlüsselt zur Weiterleitung an einen autorisierten Empfänger, insbesondere einen Netzbetreiber eines Energienetzes, an das Mobilfunkmodul übergeben werden und um andererseits unterschiedliche Profile und die in ihnen definierten Funktionen abzuarbeiten.

Das Mobilfunkmodul weist ferner ein eingebettetes System auf, das zum Betrieb eines Netzwerkmanagement-Clients eingerichtet ist.

Erfindungswesentlich ist, dass das Mobilfunkmodul zusätzlich einen Zertifikatsspeicher aufweist, der so eingerichtet ist, dass er nur dann beschreibbar ist, wenn der Prozessor ein Netzwerkmanagement-Profil abarbeitet, wobei das Beschreiben über vom Prozessor initiierte Hardware-Signale und Telegramme erfolgt.

Ein wichtiger Aspekt der Erfindung besteht darin, zusätzlich zu den typischen Konfigurationsprofilen eines Smart Meter Gateways, wie beispielsweise Zählerprofilen, Auswertungsprofilen, HAN- oder Proxy- Kommunikationsprofilen, mit denen der Gateway-Administrator die Anbindung externer Geräte wie Zähler oder CLS konfigurieren, und Erfassung, Verarbeitung und Versand von Messwerten beeinflussen kann, ein eigenes, separates Netzwerkmanagement-Konfigurations-Profil zu definieren und bei der Abarbeitung dieses Netzwerkmanagement-Konfigurations-Profils zumindest die notwendigen Zertifikate im Zertifikatsspeicher des Mobilfunkmoduls zu hinterlegen sowie optional weitere Konfigurationsschritte zur Einrichtung eines Netzwerkmanagement-Systems vorzunehmen und/oder dieses in Betrieb zu nehmen.

Dadurch, dass der Zertifikatsspeicher nur aus dem sicheren Bereich, der durch Komponenten des Target of Evaluation gebildet wird, heraus durch Hardware-Signale erfolgt, ist eine Manipulation durch Dritte bei diesem Vorgehen praktisch ausgeschlossen. Das Abarbeiten eines gegebenen Profils kann zu einem vorgegebenen Zeitpunkt angestoßen werden, was insbesondere durch eine Intervention des Gateway-Administrators über seinen gesicherten und zertifizierten Kommunikationskanal erfolgen kann; das zusätzlich Netzwerk-Kommunikations-Profil kann aber auch erst zu dem späteren Zeitpunkt über sichere Kommunikationskanäle aufgespielt werden, wie es z.B. bei der Durchführung eines Software- oder Treiberupdates durch den Gateway-Administrator erfolgt. Damit kann also eine Aktivierung zu einem späteren Zeitpunkt und/oder die Einbeziehung von Parametern, die zum Zeitpunkt des Rollouts des Smart Meter Gateways noch nicht bekannt waren, gewährleistet werden.

Dementsprechend zeichnet sich das erfindungsgemäße Verfahren zur nachträglichen Aktivierung einer Netzwerkmanagement-Funktionalität eines erfindungsgemäßen Smart Meter Gateways dadurch aus, dass der Prozessor zur Einrichtung und/oder Aktivierung der Netzwerkmanagement-Funktionalität ein bereitgestelltes Netzwerkmanagement-Profil abarbeitet und dabei Zertifikate im Zertifikatsspeicher des Kommunikationsmoduls, der insbesondere mit dem eingebetteten System, das zum Betrieb eines Netzwerkmanagement-Clients eingerichtet ist zusammenwirkt, gespeichert werden.

Besonders bevorzugt ist es, wenn beim Abarbeiten des Netzwerk-management-Profils ferner die Konfiguration des Mobilfunkmoduls für die Netzwerk-Management Funktionalität vorgenommen wird.

Vorteilhaft ist es weiterhin, wenn beim Abarbeiten des Netzwerkmanagement-Profils ferner die Netzwerkmanagement-Funktionalität aktiviert wird, wobei vorzugsweise auch die korrekte Aktivierung der Netzwerkmanagement-Funktionalität verifiziert wird.

Besonders bevorzugt ist es, wenn das Netzwerkmanagement-Profil durch den Gateway-Administrator an den Smart Meter Gateway weitergeleitet wird, um die Konfiguration und Aktivierung der Netzwerkmanagement-Funktionalität zu steuern. Der Gateway-Administrator ist gemäß den deutschen Regelungen für den sicheren Betrieb von Smart Meter Gateways verantwortlich. Diese Aufgabe wird vom grundzuständigen oder wettbewerblichen Messstellenbetreiber oder einem von ihm beauftragten Unternehmen übernommen.

Der Messstellenbetreiber in Kooperation mit dem Gateway Administrator ist für den sicheren technischen Betrieb des intelligenten Messsystems verantwortlich und zu seinen Aufgaben gehören insbesondere die Inbetriebnahme, Konfiguration, Administration, Überwachung, Wartung und informationstechnische Anbindung von Messgeräten und von anderen an das Smart-Meter-Gateway angebundenen technischen Einrichtungen, wozu der Gateway Administrator über einen sicheren Kommunikationskanal insbesondere zum Aufspielen von Updates auf den Smart Meter Gateway verfügt und zertifiziert ist.

Das bedeutet insbesondere, dass mit einer Weiterleitung des separaten, eigenen Netzwerkmanagement-Profils durch den Gateway-Administrator das Aufspielen dieses Netzwerkmanagement-Profils auf den Smart Meter Gateway über bestehende, sichere und zertifizierte Kommunikationskanäle in den sicheren Bereich des Target of Evaluation des Smart Meter Gateways gewährleistet werden kann.

Vorzugsweise wird das Netzwerkmanagement-Profil beim Hersteller des Smart Meter Gateways erzeugt, signiert und verschlüsselt und anschließend dem Gateway-Administrator zur Verfügung gestellt. Besonders bevorzugt erfolgt diese Verschlüsselung mit einem offiziellen, öffentlichen Zertifikat, das der autorisierte Empfänger bereitgestellt hat.

Wenn in dem Netzwerkmanagement-Profil LTE-Parameter für eine separaten Netzwerkmanagement-Kommunikation, ein Server-Zertifikat eines Netzwerkmanagement-Servers, Netzwerk-management-Gerätezertifikate und/oder eine IP-Adresse eines Netzwerkmanagement-Servers hinterlegt werden, ermöglicht dies einen Konfiguration und Inbetriebnahme der Netzwerkmanagement-Funktionalität im jeweiligen Umfang.

Die Erfindung wird nachfolgend exemplarisch unter Verwendung von Figuren näher erläutert.

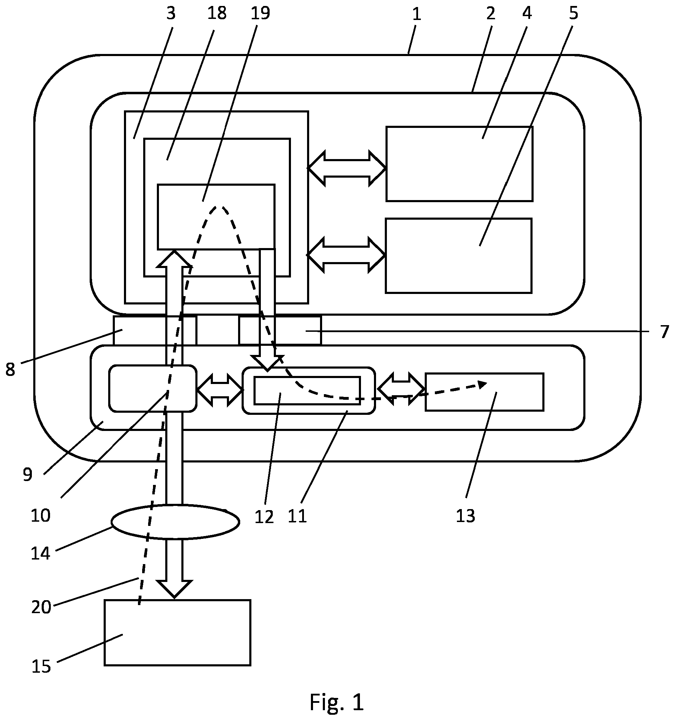

Figur 1 zeigt ein Ausführungsbeispiel eines Smart Meter Gateways.

Der in Figur 1 dargestellte Smart Meter Gateway 1 hat ein Target of Evaluation 2, das einen Prozessor 3, der mit einem Arbeitsspeicher 4 und einem Flashspeicher 5 zusammenwirkt, aufweist. Über eine Schnittstelle 8, ist ein Modem 10 eines Mobilfunkmoduls 9 angebunden.

Das Mobilfunkmodul 9 weist ein neben dem Modem 10 ein eingebettetes System (embedded system) 11 auf, auf dem ein Netzwerkmanagement-Client 12 ausgeführt werden kann. Das Mobilfunkmodul 9 weist darüber hinaus auch noch einen Zertifikatsspeicher 13 auf.

Der Zertifikatsspeicher 13, wirkt mit dem Netzwerkmanagement-Client 12 zusammen, um verschlüsselt über das Mobilfunknetz, einen Netzwerkmanagement APN (access point) und ein internes Netzwerkmanagement Netz mit dem Netzwerkmanagement-Server zu kommunizieren. Dazu müssen in ihm Zertifikate hinterlegt werden.

Der Prozessor 3 wirkt insbesondere mit dem Arbeitsspeicher 4 und dem Flashspeicher 5 zusammen, um auf einem Betriebssystem 18 eine Metering-Software 19 zu betreiben.

Im Rahmen dieses Betriebs können auf dem Betriebssystem 18 durch den Prozessor 3 unterschiedliche Profile ausgeführt werden, insbesondere dasjenige, mit dem Messdaten insbesondere von Geräten aus einem lokalen metrologischen Netz ausgelesen und verschlüsselt an das Mobilfunkmodul 9 übergeben werden, das sie über das Modem 10 und das Mobilfunknetz 14 an den autorisierten Empfänger 15 weiterleitet.

Um die Netzwerkmanagement-Funktionalität einzurichten und die Zertifikate im Zertifikatsspeicher 13 zu hinterlegen, werden durch den Hersteller des Smart Meter Gateways 1 zusätzlich Netzwerkmanagement-Profile erzeugt, in denen insbesondere LTE-Parameter wie APN, User, Passwort, IP-Version usw. des Netzwerkmanagement-Kommunikationskanals zum Netzwerkmanagement Server, ein Serverzertifikat des Netzwerkmanagement-Servers, dessen IP Adresse sowie Netzwerkmanagement-Gerätezertifikate hinterlegt sind und auch Instruktionen zur Speicherung der Zertifikate und Einrichtung und Aktivierung der Netzwerkmanagement Funktionalität enthalten sind, die durch den Prozessor 3 ausgeführt werden können, wenn er dieses Netzwerkmanagement-Profil ausführt. Das Netzwerkmanagement-Profil wird mit dem offiziellen, öffentlichen Zertifikat des Netzwerkbetreibers signiert und dem Gateway-Administrator über die dafür eingerichteten sicheren Prozesse zur Verfügung gestellt, der es, wie durch den linken Teil des Pfeils 20 symbolisiert wird, im Target of Evaluation 2 des Smart Meter Gateways 1 hinterlegt, wo es durch den Prozessor 3 abgearbeitet wird.

Bei der Abarbeitung veranlasst der Prozessor, wie durch den mittleren und rechten Teil des Pfeils 20 symbolisiert wird, dass Hardware-Signale über die Konfigurationsschnittstelle 8 gesendet werden, mit denen der Netzwerkmanagement-Client 12 konfiguriert und insbesondere die Zertifikate in den Zertifikatsspeicher 13, der nur auf diese Weise beschreibbar ist, eingeschrieben werden.

Insbesondere wird deutlich, dass der Zeitpunkt, zu dem diese Prozesse ausgeführt werden, durch den Gateway-Administrator, welcher von der Rolle Messstellenbetreiber beauftragt wird, wählbar ist und auch nach der (Erst-)Inbetriebnahme des Smart Meter Gateways liegen kann.

### Bezugszeichenliste

- 1: Smart Meter Gateway
- 2: Target of Evaluation
- 3: Prozessor
- 4: Arbeitsspeicher
- 5: Flashspeicher
- 7: Konfigurationsschnittstelle
- 8: Schnittstelle
- 9: Mobilfunkmodul
- 10: Modem
- 11: eingebettetes System
- 12: Netzwerkmanagement-Client
- 13: Zertifikatsspeicher
- 14: Mobilfunknetz
- 15: autorisierter Empfänger
- 18: Betriebssystem
- 19: Metering Software
- 20: Pfeil

## Patentansprüche

1. Smart Meter Gateway (1) mit einem Mobilfunkmodul (9), das eingerichtet ist, um über ein Mobilfunknetz (14) Messdaten an einen autorisierten Empfänger (15) weiterzuleiten,
und mit einem Prozessor (3), der mit einem Arbeitsspeicher (4) und/oder einem Flashspeicher (5) zusammenwirkt, um einerseits auf einem Betriebssystem (18) eine Metering-Software (19) zu betreiben, mit der Messdaten ausgelesen und verschlüsselt zur Weiterleitung an den autorisierten Empfänger (15) an das Mobilfunkmodul (9) übergeben werden, und um andererseits unterschiedliche Profile und die in ihnen definierten Funktionen abzuarbeiten,
wobei das Mobilfunkmodul (9) ferner ein eingebettetes System (11) aufweist, das zum Betrieb eines Netzwerkmanagement-Clients (12) eingerichtet ist,
**dadurch gekennzeichnet,**
**dass** die unterschiedlichen Profile zusätzlich zu den Konfigurationsprofilen eines Smart Meter Gateways ein separates Netzwerkmanagement-Profil enthalten, in welchem Netzwerkmanagement-Zertifikate hinterlegt sind und das durch den Prozessor ausführbare Instruktionen zur Speicherung der Zertifikate und Einrichtung und Aktivierung der Netzwerkmanagement Funktionalität enthält, und
**dass** das Mobilfunkmodul (9) zusätzlich einen Zertifikatsspeicher (13) aufweist, der so eingerichtet ist, dass er nur dann beschreibbar ist, wenn der Prozessor das separate Netzwerkmanagement-Profil abarbeitet, wobei das Beschreiben über vom Prozessor (3) initiierte Hardware-Signale und/oder Telegramme erfolgt.

2. Verfahren zur nachträglichen Aktivierung einer Netzwerkmanagement-Funktionalität eines Smart Meter Gateways (1) mit einem Mobilfunkmodul (9), das eingerichtet ist, um über ein Mobilfunknetz (14) Messdaten an einen autorisierten Empfänger (15) weiterzuleiten, und mit einem Prozessor (3), der mit einem Arbeitsspeicher (4) und/oder einem Flashspeicher (5) zusammenwirkt, um einerseits auf einem Betriebssystem (18) eine Metering-Software (19) zu betreiben, mit der Messdaten ausgelesen und verschlüsselt zur Weiterleitung an den autorisierten Empfänger (15) an das Mobilfunkmodul (9) übergeben werden, und um andererseits unterschiedliche Profile und die in ihnen definierten Funktionen abzuarbeiten,
wobei das Mobilfunkmodul (9) ferner ein eingebettetes System (11) aufweist, das zum Betrieb eines Netzwerkmanagement-Clients (12) eingerichtet ist,
**dadurch gekennzeichnet,**
**dass** die unterschiedlichen Profile zusätzlich zu den Konfigurationsprofilen eines Smart Meter Gateways ein separates Netzwerkmanagement-Profil enthalten, in welchem Netzwerkmanagement-Zertifikate hinterlegt sind und das durch den Prozessor ausführbare Instruktionen zur Speicherung der Zertifikate und Einrichtung und Aktivierung der Netzwerkmanagement Funktionalität enthält, und
**dass** das Mobilfunkmodul (9) zusätzlich einen Zertifikatsspeicher (13) aufweist, der so eingerichtet ist, dass er nur dann beschreibbar ist, wenn der Prozessor das separate Netzwerkmanagement-Profil abarbeitet, wobei das Beschreiben über vom Prozessor (3) initiierte Hardware-Signale und/oder Telegramme erfolgt,
wobei bei dem Verfahren der Prozessor (3) zur Einrichtung und/oder Aktivierung der Netzwerkmanagement-Funktionalität das separate Netzwerkmanagement-Profil abarbeitet, und wobei bei dem Verfahren Zertifikate im Zertifikatsspeicher (13) des Kommunikationsmoduls (9) gespeichert werden.

3. Verfahren nach Anspruch 2,
**dadurch gekennzeichnet, dass** beim Abarbeiten des Netzwerkmanagement-Profils ferner die Konfiguration des Mobilfunkmoduls (9) für die Netzwerk-Management Funktionalität vorgenommen wird.

4. Verfahren nach Anspruch 2 oder 3,
**dadurch gekennzeichnet, dass** beim Abarbeiten des Netzwerkmanagement-Profils ferner die Netzwerkmanagement-Funktionalität aktiviert wird.

5. Verfahren nach Anspruch 4,
**dadurch gekennzeichnet, dass** beim Abarbeiten des Netzwerkmanagement-Profils die korrekte Aktivierung der Netzwerkmanagement-Funktionalität verifiziert wird.

6. Verfahren nach einem der Ansprüche 2 bis 5,
**dadurch gekennzeichnet, dass** das Netzwerkmanagement-Profil durch einen Gateway-Administrator an den Smart Meter Gateway (1) weitergeleitet wird, um die Konfiguration und Aktivierung der Netzwerkmanagement-Funktionalität zu steuern.

7. Verfahren nach Anspruch 6,
**dadurch gekennzeichnet, dass** das Netzwerkmanagement-Profil beim Hersteller des Smart Meter Gateways (1) erzeugt, signiert und verschlüsselt wird und anschließend dem Gateway-Administrator zur Verfügung gestellt wird.

8. Verfahren nach Anspruch 7,
**dadurch gekennzeichnet, dass** das Netzwerkmanagement-Profil mit einem öffentlichen Zertifikat verschlüsselt wird, das der autorisierte Empfänger (15) bereitgestellt hat.

9. Verfahren nach einem der Ansprüche 2 bis 8,
**dadurch gekennzeichnet, dass** in dem Netzwerkmanagement-Profil LTE-Parameter für eine separaten Netzwerkmanagement-Kommunikation, ein Server-Zertifikat eines Netzwerkmanagement-Servers, Netzwerkmanagement-Gerätezertifikate und/oder eine IP-Adresse eines Netzwerkmanagement-Servers hinterlegt werden.

## Claims

1. A smart meter gateway (1) with a mobile communication module (9) that is configured to forward measurement data to an authorized recipient (15) via a mobile communication network (14),
and with a processor (3) that interacts with a working memory (4) and/or a flash memory (5) to, on the one hand, operate a metering software (19) on an operating system (18), with which metering software measurement data is read out and encrypted for forwarding to the authorized recipient (15) and transferred to the mobile communication module (9), and, on the other hand, process different profiles and the functions defined within them,
wherein the mobile communication module (9) further comprises an embedded system (11) that is configured to operate a network management client (12),
**characterized in that**
the different profiles, in addition to the configuration profiles of a smart meter gateway, contain a separate network management profile in which network management certificates are stored and which contains instructions executable by the processor for storing the certificates and setting up and activating the network management functionality, and
the mobile communication module (9) additionally has a certificate memory (13) which is set up so that it is writable only when the processor is processing the separate network management profile, wherein the writing is performed via hardware signals and/or telegrams initiated by the processor (3).

2. A method for subsequent activation of a network management functionality of a smart meter gateway (1) with a mobile communication module (9) that is configured to transmit measurement data to an authorized recipient (15) via a mobile communication network (14), and with a processor (3) that interacts with a working memory (4) and/or a flash memory (5) to, on the one hand, operate metering software (19) on an operating system (18) with which metering software measurement data is read out and encrypted for transmission to the mobile communication module (9) for forwarding to the authorized recipient (15), and, on the other hand, process different profiles and the functions defined therein,
wherein the mobile communication module (9) further comprises an embedded system (11) that is configured to operate a network management client (12),
**characterized in that**
the different profiles, in addition to the configuration profiles of a smart meter gateway, contain a separate network management profile in which network management certificates are stored and which contains instructions executable by the processor for storing the certificates and setting up and activating the network management functionality, and
the mobile communication module (9) additionally has a certificate memory (13) which is set up so that it is writable only when the processor is processing the separate network management profile, wherein the writing is performed via hardware signals and/or telegrams initiated by the processor (3),
wherein, during the method, the processor (3) processes the separate network management profile for setting up and/or activating the network management functionality, and wherein, during the method, certificates are stored in the certificate memory (13) of the communication module (9).

3. The method according to claim 2,
**characterized in that**, when processing the network management profile, the configuration of the mobile communication module (9) for the network management functionality is also performed.

4. The method according to claim 2 or 3,
**characterized in that**, when processing the network management profile, the network management functionality is also activated.

5. The method according to claim 4,
**characterized in that**, when processing the network management profile, correct activation of the network management functionality is verified.

6. The method according to any one of claims 2 to 5, **characterized in that** the network management profile is forwarded by a gateway administrator to the smart meter gateway (1) to control the configuration and activation of the network management functionality.

7. The method according to claim 6,
**characterized in that** the network management profile is generated, signed, and encrypted at the manufacturer of the smart meter gateway (1) and is then made available to the gateway administrator.

8. The method according to claim 7,
**characterized in that** the network management profile is encrypted with a public certificate provided by the authorized recipient (15).

9. The method according to any one of claims 2 to 8, **characterized in that** the network management profile contains LTE parameters for separate network management communication, a server certificate of a network management server, network management device certificates, and/or an IP address of a network management server.

## Revendications

1. Passerelle (1) de compteur intelligent comprenant un module (9) de téléphonie mobile, qui est agencé pour acheminer, par un réseau (14) de téléphonie mobile, des données de mesure à un récepteur (15) autorisé et comprenant un processeur (3) qui coopère avec une mémoire (4) de travail et/ou une mémoire (5) flash pour, d'une part, faire fonctionner sur un système (18) de fonctionnement, un logiciel (19) de metering par lequel des données de mesures sont lues et, chiffrées pour l'acheminement au récepteur (15) autorisé, transmises au module (9) de téléphonie mobile et pour, d'autre part, élaborer des profils différents et les fonctions qui y sont définies,
dans lequel le module (9) de téléphonie mobile a, en outre, un système (11) incorporé, qui est agencé pour le fonctionnement d'un client (12) de gestion de réseau, **caractérisé**
**en ce que** les profils différents contiennent, supplémentairement aux profils de configuration d'une passerelle de compteur intelligent, un profil distinct de gestion de réseau, dans lequel sont mis en mémoire des certificats de gestion de réseau et qui contient des instructions pouvant être exécutées par le processeur pour la mémorisation des certificats et la mise en œuvre et l'activation de la fonctionnalité de gestion de réseau, et en ce que le module (9) de téléphonie mobile a, en outre, une mémoire (13) de certificat, qui est agencée de manière à ne pouvoir y écrire que si le processeur élabore le profil distinct de gestion de réseau, l'écriture s'effectuant par des signaux en matériel et/ou des télégrammes initiés par le processeur (3).

2. Procédé d'activation ultérieure d'une fonctionnalité de gestion de réseau d'une passerelle (1) de compteur intelligent comprenant un module (9) de téléphonie mobile, qui est agencé pour acheminer, par un réseau (14) de téléphonie mobile, des données de mesures à un récepteur (15) autorisé, et comprenant un processeur (3), qui coopère avec une mémoire (4) de travail et/ou une mémoire (5) flash pour, d'une part, faire fonctionner sur un système (18) de fonctionnement un logiciel (19) de metering, par lequel des données de mesures sont lues et, chiffrées pour l'acheminement au récepteur (15) autorisé, transmises au module (9) de téléphonie mobile et pour, d'autre part, élaborer des profils différents et les fonctions qui y sont définies,
dans lequel le module (9) de téléphonie mobile a, en outre, un système (11) incorporé, qui est agencé pour le fonctionnement d'un client (12) de gestion de réseau, **caractérisé**
**en ce que** les profils différents contiennent, supplémentairement aux profils de configuration d'une passerelle de compteur intelligent, un profil distinct de gestion de réseau, dans lequel sont mis en mémoire des certificats de gestion de réseau et qui contient des instructions pouvant être exécutées par le processeur pour la mémorisation des certificats et la mise en œuvre et l'activation de la fonctionnalité de gestion de réseau, et en ce que le module (9) de téléphonie mobile a, en outre, une mémoire (13) de certificat, qui est agencée de manière à ne pouvoir y écrire que si le processeur élabore le profil distinct de gestion de réseau, l'écriture s'effectuant par des signaux en matériel et/ou des télégrammes initiés par le processeur (3),
dans lequel dans le procédé, le processeur (3) élabore, pour l'exécution et/ou l'activation de la fonctionnalité de gestion de réseau, le profil distinct de gestion de réseau et dans lequel dans le procédé, des certificats sont mis en mémoire dans la mémoire (13) de certificat du module (9) de communication.

3. Procédé suivant la revendication 2,
**caractérisé en ce que**, lors de l'élaboration du profil de gestion de réseau, on effectue en outre la configuration du module (9) de téléphonie mobile pour la fonctionnalité de gestion de réseau.

4. Procédé suivant la revendication 2 ou 3,
**caractérisé en ce que**, lors de l'élaboration du profil de gestion de réseau, on active en outre la fonctionnalité de gestion de réseau.

5. Procédé suivant la revendication 4,
**caractérisé en ce que**, lors de l'élaboration du profil de gestion du réseau, on vérifie l'activation correcte de la fonctionnalité de gestion de réseau.

6. Procédé suivant l'une des revendications 2 à 5, **caractérisé en ce que** l'on achemine le profil de gestion de réseau par un administrateur de passerelle à la passerelle (1) de compteur intelligent, afin de commander la configuration et l'activation de la fonctionnalité de gestion de réseau.

7. Procédé suivant la revendication 6,
**caractérisé en ce que** l'on produit, signe et chiffre, le profil de gestion de réseau chez le fabricant de la passerelle (1) de compteur intelligent et on le met ensuite à disposition de l'administrateur de passerelle.

8. Procédé suivant la revendication 7,
**caractérisé en ce que** l'on chiffre le profil de gestion du réseau par un certificat public, que le récepteur (15) autorisé a mis à disposition.

9. Procédé suivant l'une des revendications 2 à 8, **caractérisé en ce que**, dans le profil de gestion du réseau, sont mis en mémoire des paramètres LTE pour une communication distincte de gestion de réseau, un certificat d'un serveur de gestion de réseau, des certificats d'appareils de gestion de réseau et/ou une adresse IP d'un serveur de gestion de réseau.
